# EUROPÄISCHE PATENTSCHRIFT

(11) **EP 2 446 204 B1**
(45) Veröffentlichungstag und Bekanntmachung des Hinweises auf die Patenterteilung: **20.12.2017**
(21) Anmeldenummer: 10722718.3
(22) Anmeldetag: 14.06.2010
(51) Int. Cl.: F25D 23/06

(54) **KÄLTEGERÄT, INSBESONDERE HAUSHALTSKÄLTEGERÄT**
REFRIGERATION DEVICE, PARTICULARLY HOUSEHOLD REFRIGERATION DEVICE
APPAREIL FRIGORIFIQUE, EN PARTICULIER APPAREIL FRIGORIFIQUE DOMESTIQUE

(30) Priorität: 22.06.2009 DE 102009027074
(43) Veröffentlichungstag der Anmeldung: 02.05.2012
(73) Patentinhaber: BSH Hausgeräte GmbH, 81739 München (DE)
(72) Erfinder: LAIBLE, Karl-Friedrich, 89129 Langenau (DE); SONNENFROH, Irena, 89537 Giengen (DE); STELZER, Jörg, 89537 Giengen (DE); KRAPP, Michael, 89564 Nattheim (DE)
(86) Internationale Anmeldenummer: PCT/EP2010/058288
(87) Internationale Veröffentlichungsnummer: WO 2010/149516

(56) Entgegenhaltungen:
- EP-A2- 1 310 751
- DE-A1- 19 915 456
- DE-U1-202009 001 784
- US-A- 6 164 739

## Beschreibung

Die Erfindung betrifft ein Kältegerät, insbesondere ein Haushaltskältegerät, nach dem Oberbegriff des Patentanspruches 1.

Bei Haushaltskältegeräten ist der Kühlraum durch einen Gerätekorpus sowie eine Gerätetür begrenzt, die jeweils als Hohlkörper realisiert sind, deren Hohlräume mit einem Wärmeisolierschaum gefüllt sind. Die äußeren Begrenzungswände der Hohlräume sind üblicherweise aus einem Stahlblech hergestellt. Stahlblech ist fertigungstechnisch einfach zu bearbeiten. Außerdem kann durch Stahlblech-Begrenzungswände verhindert werden, dass Wasserdampf aus der Umgebungsluft in den Wärmeisolierschaum diffundiert beziehungsweise Gas (N₂, O₂, CO₂) aus dem Wärmeisolierschaum nach außen diffundiert, wodurch der Wärmeisolierschaum frühzeitig altern würde.

Aus der EP 1 310 751 A2 ist ein Kältegerät bekannt, das äußere Begrenzungswände zur Begrenzung eines mit dem Wärmeisolierschaum gefüllten Hohlraums des Gerätekorpus aufweist. Die äußere Begrenzungswand kann im Bereich des Verflüssigers einen Dreischichtaufbau bestehend aus einer Polymermateriallage, einer Polymerträgerschicht sowie einer Metallschicht aufweist. Durch diesen Materialaufbau kann ein Wärmeübergang vom Verflüssiger in Richtung auf den Kühlraum reduziert werden, wodurch Energie eingespart wird. EP 1 310 751 A2 offenbart ein Kältegerät nach dem Oberbegriff des Anspruchs 1. Aus der DE 1 501 312 A1 ist ein Kühlschrank mit Schaumstoffisolierung bekannt, die zwischen einer Außenverkleidung und einer Innenverkleidung liegt. Die Außenverkleidung kann ein diffusionsdichtes Pappgehäuse oder alternativ ein Metallblech, etwa Aluminiumblech sein. Aus der DE 101 06 947 A1 ist ebenfalls ein Kühlgerät bekannt, bei dem eine äußere Begrenzungswand des mit dem Wärmeisolierschaum ausgefüllten Hohlraumes aus aluminiumbeschichteter Pappe hergestellt ist.

DE 199 15 456 A1 offenbart eine wärmeisolierende Wandung mit einem evakuierten Zwischenraum, wobei eine Innenverkleidung und/oder eine Außenverkleidung des Zwischenraumes aus thermoplastichem Kunststoff gebildet ist, welcher mit Mitteln zur Reduzierung seiner Wasserdampf- und Gasdurchlässigkeit versehen ist.

DE 20 2009 001784 U1 offenbart einen Kühltransportbehälter mit Seitenwänden, einem oberen und unteren Abschlussteil sowie einer Tür, von denen zumindest eines zur Wärmedämmung eine Isolierschicht aufweist, die eine Kombination aus wärmedämmendem und migrationshemmendem Material ist.

Für den Fall, dass die äußeren Begrenzungswände nicht aus Stahlblech, sondern aus Kunststoffplatinen hergestellt sind, ergibt sich die Problematik, dass herkömmliche Kunststoffe nicht diffusionsdicht sind. Es müssen daher kostspielige Spezialkunststoffe, zum Beispiel EVOH oder PVDC, verwendet werden, die im Vergleich zu herkömmlichen Kunststoffen einen ausreichenden Diffusionswiderstand gegenüber Gas oder Wasserdampf aufweisen.

Die Aufgabe der Erfindung besteht darin, ein Kältegerät, insbesondere ein Haushaltskältegerät, bereitzustellen, bei dem in einfacher sowie kostengünstiger Weise eine einwandfreie Isolierwirkung des Wärmeisolierschaumes aufrechterhalten werden kann.

Die Aufgabe ist durch die Merkmale des Patentanspruches 1 gelöst. Bevorzugte Weiterbildungen der Erfindung sind in den Unteransprüchen offenbart.

Bei einem Kältegerät, insbesondere Haushaltskältegerät, mit zumindest einer Begrenzungswand zur Begrenzung eines mit einem Wärmeisolierschaum gefüllten Hohlraums eines den Kühlraum definierenden Korpus und/oder einer den Kühlraum verschließenden Gerätetür, weist erfindungsgemäß die äußere mit dem Wärmeisolierschaum in Kontakt befindliche Begrenzungswand einen Kunststoffträger auf, der zumindest eine Diffusionssperrschicht trägt. Diese verhindert zumindest im Wesentlichen eine Diffusion von Wasserdampf aus der Umgebungsluft in den Wärmeisolierschaum und/oder eine Diffusion von Gasen aus dem Wärmeisolierschaum heraus. Bei dem erfindungsgemäßen Schichtaufbau der Begrenzungswand ist die Kunststofflage als ein formstabiles Trägerteil ausgebildet. Der Kunststoffträger übernimmt daher die Tragfunktion, während eine Diffusion alleine mittels der zusätzlichen Diffusionssperrschicht verhindert wird. Demzufolge kann erfindungsgemäß auf den Einsatz von kostspieligen Spezialkunststoffen verzichtet werden, die einen ausreichend großen Diffusionswiderstand aufweisen.

Unter Haushaltskältegerät wird hier ein Kältegerät verstanden, welches zur Haushaltsführung eingesetzt wird, wie beispielsweise ein Kühlschrank, ein Gefrierschrank, eine Gefriertruhe, ein Weinlagerschrank oder eine Kühlgefrierkombination.

Die Diffusionssperrschicht ist erfindungsgemäß auf der, dem Wärmeisolierschaum abgewandten Seite der äußeren Begrenzungswand angeordnet. Erfindungsgemäß ist der Kunststoffträger auf seiner, dem Wärmeisolierschaum abgewandten Seite fertigungstechnisch einfach mit einer zusätzlichen Deckschicht verbunden. Die äußere Deckschicht wirkt als eine Dekor- und/oder Kratzschutzschicht. Als solche kann sie aus PMMA hergestellt sein, das unter Bildung großer Haft- oder Laminatkräfte mit dem Kunststoffmaterial des Kunststoffträgers verbindbar ist.

Die Diffusionssperrschicht, insbesondere eine Aluminiumschicht, und der Wärmeisolierschaum können voneinander unterschiedliche Materialeigenschaften aufweisen. Dies kann die Schaumhaftung an der Diffusionssperrschicht beeinträchtigen. Zur Steigerung der Schaumhaftung kann auf der Innenseite der Diffusionssperrschicht zusätzlich eine Haftschicht aufgetragen werden, die die Schaumhaftung steigert.

Wie aus obiger Beschreibung hervorgeht, übernimmt erfindungsgemäß die Kunststofflage eine Tragfunktion in der Begrenzungswand. Die Materialstärke der Kunststofflage ist daher wesentlich größer als die der Diffusionssperrschicht und der Deckschicht bemessen. Beispielhaft kann die Kunststofflage eine Schichtdicke im Bereich von 1,5 mm aufweisen, während die Diffusionssperrschicht eine Materialstärke im Bereich von 0,009 mm aufweisen kann. Die Materialstärke des Kunststoffträgers kann vor diesem Hintergrund um das 100 bis 200-fache größer sein als die Materialstärke der Diffusionssperrschicht.

Aufgrund möglicher mechanischer Beanspruchung kann demgegenüber die äußere Deckschicht - im Vergleich zur Diffusionssperrschicht - von größerer Materialstärke sein, um gegebenenfalls äußeren mechanischen Belastungen besser standhalten zu können. Die Materialstärke des Kunststoffträgers kann demnach um etwa das zehnfache größer sein als die Materialstärke der Deckschicht.

Da erfindungsgemäß der Kunststoffträger keine Diffusionssperrfunktion übernehmen muss, kann auf den Einsatz von diffusionsdichten Spezialkunststoffen verzichtet werden. Erfindungsgemäß wird ein kostengünstiges und einfaches Kunststoffmaterial für den Kunststoffträger, nämlich ABS, PS, SB oder PP, verwendet werden. Besonders hohe Haftkräfte zwischen der Deckschicht und dem Kunststoffträger können bei einer Materialpaarung von ABS für den Kunststoffträger und PMMA für die Deckschicht erzielt werden.

Zusätzlich zur oben genannten Ausführungsform wird die Deckschicht auch unter Zwischenlage der Diffusionssperrschicht auf dem Kunststoffträger aufgebracht. Somit ist sowohl die Deckschicht als auch die Diffusionssperrschicht außenseitig an der äußeren Begrenzungswand aufgetragen, wodurch der Wärmeisolierschaum unter Bildung einer großen Schaumhaftung unmittelbar in Kontakt mit dem Material des Kunststoffträgers ist.

Bei einem derart gebildeten Dreischichtaufbau bestehend aus der Deckschicht, der Diffusionssperrschicht sowie dem Kunststoffträger kann die Deckschicht zusammen mit der Diffusionssperrschicht fertigungstechnisch einfach als eine Verbundlage bereitgestellt sowie auf die Außenseite des Kunststoffträgers aufgebracht werden.

Das Aufbringen der Diffusionssperrschicht auf den Kunststoffträger kann durch Verklebung oder durch Aufschmelzen erfolgen. Zur Durchführung eines Aufschmelzvorgangs kann die Diffusionssperrschicht eine schmelzbare Trägerschicht aufweisen. Mittels seiner schmelzbaren Trägerschicht kann die Diffusionsschicht unter Wärmebeaufschlagung auf den Kunststoffträger geschmolzen werden.

Alternativ kann eine aus Metall gebildete Diffusionssperrschicht auch auf den Kunststoffträger aufgedampft werden. Um hierbei eine diffusionsdichte Schicht zu erzeugen, kann das Metall, insbesondere Aluminium, zweilagig aufgedampft werden.

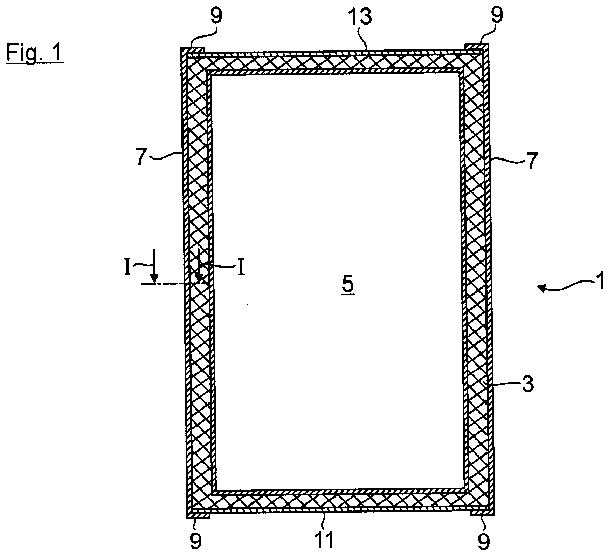

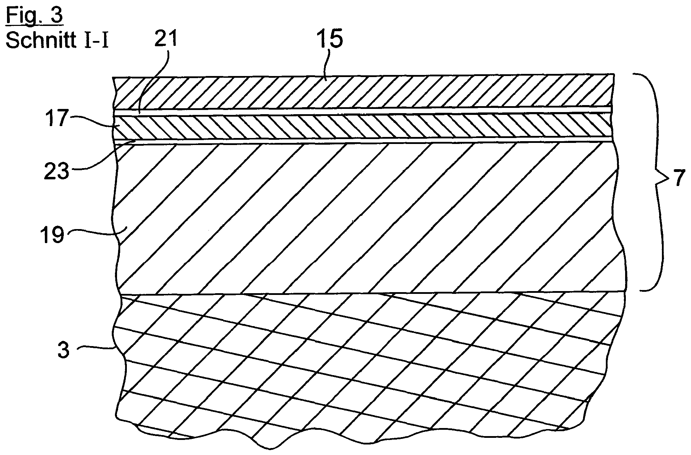

Nachfolgend ist ein Ausführungsbeispiel der Erfindung anhand der beigefügten Figuren 1 und 3 beschrieben.

Es zeigen:
- Fig. 1: in einer grob schematischen Schnittdarstellung ein Haushaltskältegerät;
- Fig. 2: eine vergrößerte Teilansicht in der Schnittebene I-I aus der Fig. 1 des Materialaufbaus einer äußeren Begrenzungswand gemäß einem Beispiel, das jedoch nicht unter den Schutzbereich der Ansprüche fällt;
- Fig. 3: in einer Ansicht entsprechend der Fig. 2 ein Ausführungsbeispiel; und
- Fig. 4: in einer Ansicht entsprechend der Fig. 2 ein weiteres Beispiel, das jedoch nicht unter den Schutzbereich der Ansprüche fällt.

In der Fig. 1 ist ein Kältegerät mit einem Korpus 1 gezeigt, der als ein mit einem Wärmeisolierschaum 3 ausgefüllter Hohlkörper realisiert ist. Der Korpus 1 begrenzt einen Kühlraum 5, der wiederum frontseitig durch eine nicht gezeigte Gerätetür verschließbar ist.

Wie aus der Fig. 1 weiter hervorgeht, weist der Korpus 1 äußere Begrenzungswände 7 auf, die an ihren oberen und unteren Enden mit abgekanteten Befestigungsflanschen 9 versehen sind. Die Befestigungsflansche 9 der äußeren Begrenzungswände 7 übergreifen randseitig eine Bodenwand 11 und eine Deckwand 13 des Korpus 1. Die Befestigungsflansche 9 sind dabei schaumdicht mit den Boden- und Seitenwänden 11, 13 verbunden.

Auf der, dem Kühlraum 5 zugewandten Innenseite ist der Korpus 1 mittels einer Kunststoffverkleidung 14 begrenzt, die im Tiefziehverfahren hergestellt sein kann.

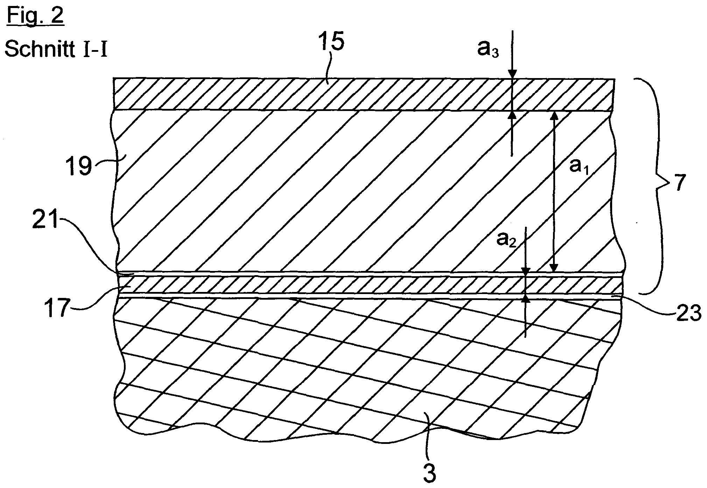

In der Fig. 2 ist der Materialaufbau von einer der äußeren Begrenzungswände gemäß einem Beispiel, das jedoch nicht unter dem Schutzbereich der Ansprüche fällt, gezeigt. Wie aus der Fig. 2 hervorgeht, ist die Begrenzungswand 7 im Wesentlichen im Dreischichtaufbau ausgeführt, bei dem die Begrenzungswand 7 eine äußere Deckschicht 15 sowie eine innere, dem Wärmeisolierschaum 3 zugewandte Diffusionssperrschicht 17 aufweist. Zwischen der Deckschicht 15 und der Diffusionssperrschicht 17 ist ein Kunststoffträger 19 geschaltet.

Der Kunststoffträger 19 übernimmt in dem gezeigten Dreischichtaufbau die Tragfunktion und sorgt für eine Steifigkeit und Formstabilität der äußeren Begrenzungswand 7. Entsprechend ist der Kunststoffträger 19 als eine Kunststoffplatine mit im Vergleich zu den Deck- und Diffusionssperrschichten 15, 17 stark vergrößerten Materialstärke a₁ bemessen, die im Bereich von 1,5 mm liegen kann.

Die Materialstärke a₂ der Diffusionssperrschicht 17 kann demgegenüber in einem Bereich von 0,009 mm liegen, während die Materialstärke a₃ der Deckschicht 15 bei 0,150 mm liegen kann. Der Kunststoffträger 19 ist hier beispielhaft aus dem Kunststoff ABS gefertigt, während die Deckschicht 15 aus dem Kunststoff PMMA hergestellt ist, der einerseits der Deckschicht 15 eine gute Kratzschutzfunktion verleiht und andererseits zum Beispiel durch eine Schmelzverbindung mit großer Haftkraft unmittelbar mit dem Kunststoffträger 19 verbindbar ist.

Die Diffusionssperrschicht 17 kann als Aluminiumschicht ausgeführt sein, die gemäß der Fig. 2 unter Zwischenlage einer Haftschicht 21 mit dem Kunststoffträger 19 verklebt ist. Auf der, dem Wärmeisolierschaum 3 zugewandten Seite ist die Aluminiumschicht 17 mit einer weiteren Haftschicht 23 ausgeführt, um die Schaumhaftung an der Begrenzungswand 7 zu erhöhen.

In der Fig. 3 ist der Materialaufbau der Begrenzungswand 7 gemäß einem Ausführungsbeispiel gezeigt. Daraus geht ebenfalls ein Dreischichtaufbau aus der äußeren Deckschicht 15 sowie der Aluminiumschicht 17 und dem Kunststoffträger 19 hervor.

Im Unterschied zur Fig. 2 ist die äußere Deckschicht 15 nicht unmittelbar auf dem Kunststoffträger 19 aufgebracht, sondern unter Zwischenlage der Aluminiumschicht 17. Die Aluminiumschicht 17 befindet sich daher an der vom Wärmeisolierschaum 3 abgewandten Seite des Kunststoffträgers 19.

Fertigungstechnisch vorteilhaft kann daher die Deckschicht 15 zusammen mit der Aluminiumschicht 17 als eine Verbundlage vorgehalten werden, die in einem einzigen Herstellungsschritt auf die Außenseite des Kunststoffträgers 19 aufgebracht werden kann. Im gezeigten Endzustand ist die Deckschicht 15 unter Zwischenschaltung der Haftschicht 21, der Aluminiumschicht sowie der Haftschicht 23 auf den Kunststoffträger 19 aufgebracht.

Demgegenüber ist der Kunststoffträger 19 innenseitig unmittelbar mit dem Wärmeisolierschaum 3 in Kontakt, wodurch ohne zusätzliche Maßnahmen eine ausreichend große Schaumhaftung mit der Begrenzungswand 7 erzeugt werden kann.

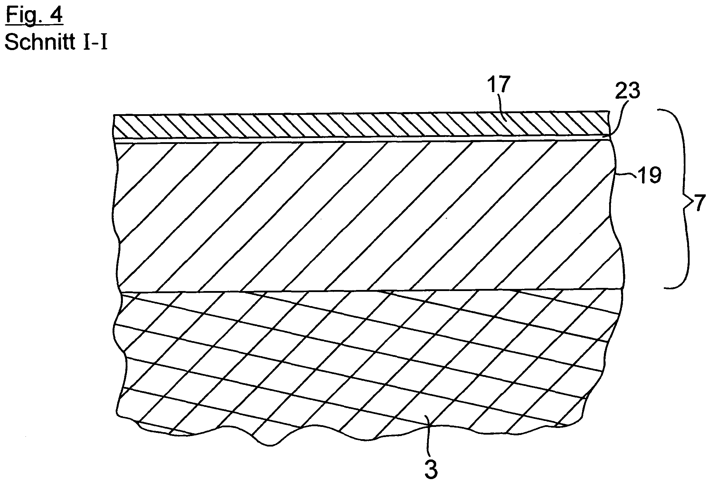

In der Fig. 4 ist die Begrenzungswand 7 unter Weglassung der äußeren Deckschicht 15 in einem Zweischichtaufbau ausgeführt. Dieses Beispiel fällt jedoch nicht unter den Schutzbereich der Ansprüche. Die Aluminiumschicht 17 ist dabei wie auch in der Fig. 3 außenseitig unter Zwischenschaltung der Haftschicht 23 auf dem Kunststoffträger 19 aufgetragen. Die in der Fig. 4 gezeigte Begrenzungswand 7 ist insbesondere bei Einbau-Kältegeräten anwendbar, die in Einbaulage in eine Möbelnische eingeschoben sind. In diesem Fall sind somit die seitlichen äußeren Begrenzungswände 7 sichtgeschützt sowie geschützt vor mechanischer Beanspruchung in der Möbelnische angeordnet, so dass auf die als Kratzschutz- oder Dekorschicht wirkende Deckschicht 15 verzichtet werden kann.

### BEZUGSZEICHENLISTE

- 1: Gerätekorpus
- 3: Wärmeisolierschaum
- 5: Kühlraum
- 7: Begrenzungswand
- 9: Befestigungsflansch
- 11: Bodenwand
- 13: Deckwand
- 14: Innenverkleidung
- 15: Deckschicht
- 17: Diffusionssperrschicht
- 19: Kunststoffträger
- 21, 23: Haftschicht
- a₁ -a₃: Materialstärken

## Patentansprüche

1. Kältegerät, insbesondere Haushaltskältegerät, mit zumindest einer äußeren Begrenzungswand (7), welche einen mit einem Wärmeisolierschaum (3) gefüllten Hohlraum eines den Kühlraum (5) definierenden Korpus (1) und/oder einer den Kühlraum (5) verschließenden Gerätetür begrenzt, wobei die äußere mit dem Wärmeisolierschaum in Kontakt befindliche Begrenzungswand (7) einen als formstabiles Trägerteil ausgebildeten Kunststoffträger (19) mit zumindest einer Diffusionssperrschicht (17) aufweist, die eine Diffusion von Wasserdampf und/oder Gasen zumindest im Wesentlichen verhindert, **dadurch gekennzeichnet, dass** die Diffusionssperrschicht (17) auf der dem Wärmeisolierschaum (3) abgewandten Seite des Kunststoffträgers (19) angeordnet ist, wobei der Kunststoffträger (19) aus ABS, PS, SB oder PP hergestellt ist, wobei der Kunststoffträger (19) auf der von dem Wärmeisolierschaum (3) abgewandten Seite eine Dekor- und/oder Kratzschutzschicht als Deckschicht (15) aufweist und wobei die Deckschicht (15) unter Zwischenlage der Diffusionssperrschicht (17) auf dem Kunststoffträger (19) aufgebracht ist.

2. Kältegerät nach Anspruch 1, **dadurch gekennzeichnet, dass** auf der dem Wärmeisolierschaum (3) zugewandten Seite der Begrenzungswand (7), insbesondere auf der Diffusionssperrschicht (17), eine zusätzliche Haftschicht (23) aufgetragen ist zur Bildung von Haft- und/oder Laminatkräften zwischen der Begrenzungswand (7) und dem Wärmeisolierschaum (3).

3. Kältegerät nach einem der vorhergehenden Ansprüche, **dadurch gekennzeichnet, dass** die Diffusionssperrschicht (17) aus einer Metallschicht, etwa eine Aluminiumschicht, und insbesondere aus einer Trägerschicht besteht.

4. Kältegerät nach Anspruch 3, **dadurch gekennzeichnet, dass** die Trägerschicht aus einem Kunststoffmaterial besteht, über das die Metallschicht auf den Kunststoffträger (19) aufschmelzbar ist.

5. Kältegerät nach Anspruch 3, **dadurch gekennzeichnet, dass** die Metallschicht (17) zumindest einlagig oder zweilagig auf den Kunststoffträger (19) aufgedampft ist.

6. Kältegerät nach einem der vorhergehenden Ansprüche, **dadurch gekennzeichnet, dass** die Schichtdicke (a₁) des Kunststoffträgers (19) in einem Bereich von größer als 1 mm, insbesondere 1,5 mm, die Schichtdicke (a₂) der Diffusionssperrschicht (17) in einem Bereich von 0,009 mm, und/oder der Deckschicht (15) in einem Bereich von 0,150 mm liegt.

7. Kältegerät nach einem der vorhergehenden Ansprüche, **dadurch gekennzeichnet, dass** die Schichtdicke (a₁) des Kunststoffträgers (19) um das 50 bis 200-fache, insbesondere um das 100 bis 200-fache, größer ist als die Schichtdicke (a₂) der Diffusionssperrschicht (17).

8. Kältegerät nach einem der vorhergehenden Ansprüche, **dadurch gekennzeichnet, dass** die Schichtdicke (a₁) des Kunststoffträgers (19) um das 5 bis 10-fache größer ist als die Schichtdicke (a₃) der Deckschicht (15).

9. Kältegerät nach einem der vorhergehenden Ansprüche, **dadurch gekennzeichnet, dass** die Deckschicht (15) aus PMMA hergestellt ist.

## Claims

1. Refrigeration device, in particular household refrigeration device, having at least one outer boundary wall (7) which bounds a cavity, filled with a heat insulation foam (3), of a carcass (1) defining the refrigeration compartment (5) and/or of a device door closing the refrigeration compartment (5), wherein the outer boundary wall (7) which is in contact with the heat insulation foam has a plastic carrier (19) designed as an inherently stable carrier piece and having at least one diffusion barrier layer (17) which at least essentially prevents a diffusion of water vapour and/or gases, **characterised in that** the diffusion barrier layer (17) is arranged on the side of the plastic carrier (19) facing away from the heat insulation foam (3), wherein the plastic carrier is made of ABS, PS, SB or PP, wherein the plastic carrier (19) has a decorative and/or scratch-proof layer as a cover layer (15) on the side facing away from the heat insulation foam (3) and wherein the cover layer (15) is applied to the plastic carrier (19) with the interposition of the diffusion barrier layer (17).

2. Refrigeration device according to claim 1, **characterised in that** an additional adhesive layer (23) is applied to the side of the boundary wall (7) facing the heat insulation foam (3), in particular to the diffusion barrier layer (17), for the formation of adhesive and/or laminate forces between the boundary wall (7) and the heat insulation foam (3).

3. Refrigeration device according to one of the preceding claims, **characterised in that** the diffusion barrier layer (17) consists of a metal layer, such as an aluminium layer, and in particular of a carrier layer.

4. Refrigeration device according to claim 3, **characterised in that** the carrier layer consists of a plastic material, by way of which the metal layer can be fused to the plastic carrier (19).

5. Refrigeration device according to claim 3, **characterised in that** the metal layer (17) is vapour-deposited onto the plastic carrier (19) in at least one or two layers.

6. Refrigeration device according to one of the preceding claims, **characterised in that** the layer thickness (a₁) of the plastic carrier (19) lies in a range of greater than 1 mm, in particular 1.5 mm, the layer thickness (a₂) of the diffusion barrier layer (17) lies in a range of 0.009 mm, and/or the cover layer (15) lies in a range of 0.150 mm.

7. Refrigeration device according to one of the preceding claims, **characterised in that** the layer thickness (a₁) of the plastic carrier (19) is 50 to 200 times, in particular 100 to 200 times, greater than the layer thickness (a₂) of the diffusion barrier layer (17).

8. Refrigeration device according to one of the preceding claims, **characterised in that** the layer thickness (a₁) of the plastic carrier (19) is 5 to 10 times greater than the layer thickness (a₃) of the cover layer (15).

9. Refrigeration device according to one of the preceding claims, **characterised in that** the cover layer (15) is made of PMMA.

## Revendications

1. Appareil frigorifique, en particulier appareil frigorifique ménager, avec au moins une paroi de délimitation (7) extérieure, laquelle délimite une cavité remplie d'une mousse d'isolation thermique (3) d'un corps (1) définissant le compartiment de refroidissement (5) et/ou d'une porte d'appareil fermant le compartiment de refroidissement (5), dans lequel la paroi de délimitation (7) extérieure se trouvant en contact avec la mousse d'isolation thermique comprend un support en plastique (19) conçu sous la forme d'une partie de support à stabilité de forme avec au moins une couche de barrière de diffusion (17) qui empêche au moins essentiellement une diffusion de vapeur d'eau et/ou de gaz, **caractérisé en ce que** la couche de barrière de diffusion (17) est disposée sur le côté opposé à la mousse d'isolation thermique (3) du support en plastique (19), dans lequel le support en plastique (19) est produit à partir d'ABS, de PS, de SB ou de PP, dans lequel le support en plastique (19) comprend une couche décorative et/ou de protection contre le grattage sous la forme d'une couche de recouvrement (15) sur le côté opposé à la mousse d'isolation thermique (3) et dans lequel la couche de recouvrement (15) est appliquée avec intercalation de la couche de barrière de diffusion (17) sur le support en plastique (19).

2. Appareil frigorifique selon la revendication 1, **caractérisé en ce qu'**une couche adhésive supplémentaire (23) est déposée sur le côté faisant face à la mousse d'isolation thermique (3) de la paroi de délimitation (7), en particulier sur la couche de barrière de diffusion (17), pour la formation de forces d'adhérence et/ou de stratification entre la paroi de délimitation (7) et la mousse d'isolation thermique (3).

3. Appareil frigorifique selon l'une des revendications précédentes, **caractérisé en ce que** la couche de barrière de diffusion (17) est constituée d'une couche métallique, par exemple une couche d'aluminium, et en particulier d'une couche de support.

4. Appareil frigorifique selon la revendication 3, **caractérisé en ce que** la couche de support est constituée d'une matière plastique sur laquelle la couche métallique est fusible sur le support en plastique (19).

5. Appareil frigorifique selon la revendication 3, **caractérisé en ce que** la couche métallique (17) est déposée par vaporisation en au moins une couche ou deux couches sur le support en plastique (19).

6. Appareil frigorifique selon l'une des revendications précédentes, **caractérisé en ce que** l'épaisseur de couche (a₁) du support en plastique (19) se situe dans une gamme supérieure à 1 mm, en particulier 1,5 mm, l'épaisseur de couche (a₂) de la couche de barrière de diffusion (17) se situe dans une gamme autour de 0,009 mm, et/ou celle de la couche de recouvrement (15) se situe dans une gamme autour de 0,150 mm.

7. Appareil frigorifique selon l'une des revendications précédentes, **caractérisé en ce que** l'épaisseur de couche (a₁) du support en plastique (19) est supérieure de 50 à 200 fois, en particulier de 100 à 200 fois, à l'épaisseur de couche (a₂) de la couche de barrière de diffusion (17).

8. Appareil frigorifique selon l'une des revendications précédentes, **caractérisé en ce que** l'épaisseur de couche (a₁) du support en plastique (19) est supérieure de 5 à 10 fois à l'épaisseur de couche (a₃) de la couche de recouvrement (15).

9. Appareil frigorifique selon l'une des revendications précédentes, **caractérisé en ce que** la couche de recouvrement (15) est produite à partir de PMMA.
